# EUROPÄISCHE PATENTSCHRIFT

(11) **EP 4 134 539 B1**
(45) Veröffentlichungstag und Bekanntmachung des Hinweises auf die Patenterteilung: **21.08.2024**
(21) Anmeldenummer: 22174847.8
(22) Anmeldetag: 23.05.2022
(51) Int. Cl.: F02K 9/64, F02K 9/97

(54) **RAKETENTRIEBWERKSABSCHNITT MIT PORÖSEM INNENWANDTEIL UND VERFAHREN ZUM HERSTELLEN EINES RAKETENTRIEBWERKSABSCHNITTS**
ROCKET PROPULSION SECTION WITH POROUS INNER WALL AND METHOD FOR MANUFACTURING A ROCKET PROPULSION SECTION
SECTION DE MOTEUR-FUSÉE POURVU DE PARTIE DE PAROI INTÉRIEURE POREUSE ET PROCÉDÉ DE FABRICATION D'UNE SECTION DE MOTEUR-FUSÉE

(30) Priorität: 09.08.2021 DE 102021120637
(43) Veröffentlichungstag der Anmeldung: 15.02.2023
(73) Patentinhaber: ArianeGroup GmbH, 82024 Taufkirchen (DE)
(72) Erfinder: Wiedmann, Dietmar, 83064 Raubling (DE); Eiringhaus, Daniel, 85748 Garching (DE); Riedmann, Hendrik, 83629 Weyarn (DE); Riss, Fabian, 83109 Großkarolinenfeld (DE)
(74) Vertreter: Schornack, Oliver

(56) Entgegenhaltungen:
- DE-A1- 19 730 674
- DE-A1- 3 320 556
- US-A- 5 501 011
- US-A- 5 903 976
- US-A1- 2019 299 290

## Beschreibung

Die Erfindung betrifft einen Raketentriebwerksabschnitt mit einem porösen Innenwandteil und ein Verfahren zum Herstellen eines Raketentriebwerksabschnitts. Insbesondere betrifft die Erfindung einen Raketentriebwerksabschnitt mit einem porösen Abschnitt in einer Innenwand eines Brennkammerkörpers, wobei der poröse Abschnitt einstückig in die Innenwand integriert ist. Ferner betrifft die Erfindung ein Verfahren zum Herstellen eines solchen Raketentriebwerksabschnitts mittels additiver Fertigung.

Bei Raketentriebwerken wird deren Brennkammer zum Beispiel mittels Transpirationskühlung gekühlt, um die Brennkammer vor den Heißgasen zu schützen. Hierbei wird meist eine Treibstoffkomponente des Raketentriebwerks zu der inneren Brennkammerwand geleitet, wo es einen Kühlfilm gebildet. Zur Einleitung der Treibstoffkomponente können an der Brennkammerwand Inlays vorgesehen sein, die eine poröse Struktur aufweisen.

Zum Beispiel wird in der DE 33 20 556 eine Raketenbrennkammer mit einer Kühlwand beschrieben, in der Kühlkanäle bildende Kehlen vorhanden sind. In einem Abschnitt der Kühlwand ist ein poröses Material vorgesehen, das einen "schwitzenden Abschnitt" bildet, d. h. eine Flüssigkeit kann durch Poren des Abschnitts abgegeben werden. In der US 2019/299290 A1 wird ein Verfahren zum Herstellen eines Abschnitts einer Brennkammerwand beschrieben, wobei eine additive Fertigungsmethode eingesetzt wird, um ein ungleichmäßiges poröses Material herzustellen. Dieses poröse Material kann zur Erzeugung einer Transpirationskühlung eingesetzt werden.

Die DE 199 01 424 B4 schlägt demgegenüber vor, Perforationsbohrungen vorzunehmen, durch die Kühlmittel zur Heißgasseite strömen kann und an der Innenwand einen Transpirationsschleier bildet. Durch entsprechende Dimensionierung der Perforationsbohrungen kann ein Stabilisierungseffekt gegenüber Druckschwankungen erzielt werden.

Ferner betrifft die US 5,501,011 eine Transpirationskühlung für eine Brennkammer eines Raketentriebwerks. Diese wird durch eine poröse Wand, welche eine permeable Struktur bildet, erzielt. Auf der Außenseite der poröse Wand ist eine Metallfolie mit Mikro-Perforationen vorgesehen, die eine hydraulische Kalibrierungsschicht bildet.

Sowohl bei porösen Inlays als auch Perforationsbohrungen sind deren Herstellung, d.h. Anbringung an bzw. Bohren in die innere Brennkammerwand sehr zeitaufwendig und kostenintensiv.

Vor diesem Hintergrund liegt der vorliegenden Erfindung die Aufgabe zugrunde, einen Raketentriebwerksabschnitt sowie ein zugehöriges Herstellungsverfahren bereitzustellen, die schnell umzusetzen sind und mit geringen Kosten verbunden sind. Diese Aufgabe wird durch einen Raketentriebwerksabschnitt mit den Merkmalen des Anspruchs 1 sowie ein Verfahren mit den Merkmalen des Anspruchs 7 & gelöst.

Gemäß einem ersten Aspekt zum besseren Verständnis der vorliegenden Offenbarung umfasst ein Raketentriebwerksabschnitt einen Brennkammerkörper mit einer Innenwand und einen ein Kühlmedium führenden Kanal, der außenseitig und entlang der Innenwand verläuft. Der Brennkammerkörper umschließt mit seiner Innenwand zumindest einen Teil einer Brennkammer. Der Brennkammerkörper kann zum Beispiel rotationssymmetrisch sein oder anderweitig an ein gutes Strömungsverhalten eines Heißgasstromes angepasst sein.

So weist der Brennkammerkörper eine Axialrichtung auf, die zum Beispiel in Strömungsrichtung des Heißgasstromes verläuft und/oder die Rotationssymmetrieachse bildet. Entsprechend kann der Brennkammerkörper eine Umfangsrichtung aufweisen, die zum Beispiel in einer Ebene senkrecht zur Axialrichtung verläuft. Entsprechend verläuft eine Radialrichtung senkrecht zur Axialrichtung und ebenfalls in der Ebene senkrecht zur Axialrichtung. In der vorliegenden Offenbarung betreffen Begriffe wie "innen" und "außen" Bereiche oder Abschnitte, die (näher) zur Rotationssymmetrieachse oder einem Zentrum liegen bzw. weiter entfernt von der Rotationssymmetrieachse oder dem Zentrum liegen.

Der ein Kühlmedium führende Kanal ist außen zu der Innenwand des Brennkammerkörpers angeordnet. Mit anderen Worten ist der Kanal auf einer der Brennkammer abgewandten Seite der Innenwand des Brennkammerkörpers angeordnet. Dabei kann der Kanal unmittelbar an einer Außenseite der die Innenwand bildenden Hülle angeordnet sein. Ferner kann die Hülle auch einen Abschnitt des Kanals begrenzen. Alternativ oder zumindest abschnittsweise kann der Kanal auch mittelbar (indirekt) an der die Innenwand bildenden Hülle angeordnet sein. Bei einer unmittelbaren Anordnung kann eine effiziente Kühlung durch Aufnahme von Wärme direkt von der Hülle erfolgen. Bei einer mittelbaren Anordnung kann neben einer Kühlung der Hülle auch ein optimaler Verlauf des ein Kühlmedium führenden Kanals berücksichtigt werden.

Ferner umfasst der Raketentriebwerksabschnitt einen porösen Abschnitt, der einstückig mit der Innenwand ausgebildet und in die Innenwand integriert ist. Dies bedeutet, dass der poröse Abschnitt aus demselben Material wie die Innenwand oder durchgehend mit der die Innenwand bildenden Hülle hergestellt ist. Der poröse Abschnitt ist demnach nicht gesondert gefertigt worden und in die Hülle eingesetzt worden, sondern in die Innenwand bzw. die die Innenwand bildende Hülle integriert. Dies kann insbesondere in Form einer additiven Fertigung umgesetzt werden, wie dies noch näher erörtert wird.

Zudem ist der poröse Abschnitt dazu eingerichtet, das in dem Kanal geführte Kühlmedium von dem Kanal in das Innere des Brennkammerkörpers hindurchzulassen. Mit anderen Worten ist der poröse Abschnitt durchlässig für das Kühlmedium und bildet eine fluidischen Verbindung zwischen der Brennkammer und dem Kanal.

Insbesondere bestimmt eine Porosität des porösen Abschnitts einen Volumenstrom und/oder Massenstrom des in das Innere des Brennkammerkörpers hindurchgelassenen Kühlmediums. Die Porosität wird einerseits durch ein Verhältnis eines bestimmten Volumenabschnitts der Innenwand und dem darin enthaltenen Hohlraumvolumen bestimmt. Hierbei lässt sich die Porosität auch als Verhältnis zwischen Rohdichte des die (normale) Innenwand bildenden Materials und der Dichte des porösen Abschnitts bestimmen. Andererseits wird die Porosität in der vorliegenden Offenbarung auch durch eine Fluid-Durchlässigkeit von einer Außenseite zu einer Innenseite des porösen Abschnitts bestimmt. Mit anderen Worten wird die Porosität auch in Abhängigkeit einer fluidischen Verbindung einzelner Hohlräume des porösen Abschnitts miteinander, beispielsweise ebenfalls in einem Verhältnis der entsprechenden Volumina, bestimmt.

Diese spezielle Form eines Raketentriebwerksabschnitts ermöglicht eine Transpirationskühlung der Innenwand des Brennkammerkörpers, wobei der poröse Abschnitt kostengünstig und schnell in die Innenwand integriert werden kann, beispielsweise während der Herstellung der Innenwand oder des Brennkammerkörpers. Insbesondere entfallen zusätzliche Arbeitsschritte für die gesonderte Herstellung eines porösen Materials, welches dann in die Innenwand der Brennkammer in dort zunächst vorzusehende Öffnungen oder Vertiefungen eingesetzt werden muss. Ferner kann auf eine Befestigung eines solchen Inlays in der Innenwand der Brennkammer verzichtet werden, da der poröse Abschnitt in der vorliegenden Offenbarung einstückig mit der Innenwand ausgebildet und darin integriert ist. Ebenso müssen keine zeitaufwendigen und kostenintensiven Bohrungen (Perforationen) vorgenommen werden.

In einer Implementierungsvariante kann der poröse Abschnitt auf einen bestimmten Bereich des Brennkammerkörpers begrenzt sein. Beispielsweise kann der poröse Abschnitt dort in die Innenwand integriert sein, wo die größte thermische Belastung zu erwarten ist. Somit weist der poröse Abschnitt eine begrenzte Erstreckung in Axialrichtung auf. Da die meisten Brennkammerkörper rotationssymmetrisch sind, kann der poröse Abschnitt in Umfangsrichtung durchgängig in die Innenwand integriert sein. Selbstverständlich können aus statischen Gründen in Umfangsrichtung mehrere poröse Abschnitte angeordnet sein, wobei jeweils zwischen einem Paar poröser Abschnitte ein Abschnitt der Innenwand ohne Porosität angeordnet ist. Ebenfalls optional können mehrere poröse Abschnitte in die Innenwand in einem Schachbrettmuster integriert sein, d. h. das sowohl in Axialrichtung als auch Umfangsrichtung jeweils zwischen einem Paar poröser Abschnitte ein Abschnitt der Innenwand ohne Porosität angeordnet ist. Dabei können sich diagonal zueinander angeordnete poröse Abschnitte berühren oder durch einen Abschnitt der Innenwand ohne Porosität voneinander beabstandet sein.

In einer Implementierungsvariante kann die Porosität des porösen Abschnitts in Axialrichtung und/oder Umfangsrichtung des Brennkammerkörpers variieren. Somit ist es möglich, die Porosität an die Lage innerhalb des Brennkammerkörpers anzupassen, wodurch auch ein Volumenstrom und/oder Massenstrom des Kühlmediums, welches zur Transpirationskühlung eingesetzt wird, und somit die Transpirationskühlung selbst an die Lage innerhalb des Brennkammerkörpers angepasst werden. Beispielsweise kann für eine Position innerhalb des Brennkammerkörpers, der höheren Temperaturen ausgesetzt ist, ein Abschnitt größerer Porosität und somit stärkerer Kühlung vorgesehen werden als in anderen Abschnitten, die nicht so hohen Temperaturen ausgesetzt sind.

Das Variieren der Porosität kann abschnittsweise erfolgen oder sich kontinuierlich ändern. Dadurch lässt sich der Volumenstrom und/oder Massenstrom des Kühlmediums und die dazugehörige Transpirationskühlung übergangslos an die thermische Belastung des Brennkammerkörpers anpassen. Dies kann beispielsweise dort vorteilhaft sein, wo sich auch der Brennkammerkörper kontinuierlich in seiner Ausdehnung (insbesondere in Radialrichtung) ändert.

In einer anderen Implementierungsvariante kann der poröse Abschnitt an einem Brennkammerhals des Brennkammerkörpers angeordnet sein. Der Brennkammerhals ist ein Abschnitt der Brennkammer in Axialrichtung, der in Radialrichtung betrachtet eine Engstelle darstellt. Durch die Heißgase, die diese Engstelle passieren müssen, ist die Innenwand des Brennkammerkörpers besonders hohen Temperaturen ausgesetzt und unterliegt somit einer hohen thermischen Beanspruchung. Durch die Anordnung des porösen Abschnitts und dadurch die Erzielung einer Transpirationskühlung kann die Innenwand des Brennkammerkörpers gut vor diesen hohen Temperaturen geschützt werden.

Ebenso ist es möglich, dass der poröse Abschnitt an einem Übergang zwischen Brennkammer und Düsenerweiterung vorgesehen ist. Der poröse Abschnitt kann sich auch über mehrere Bereiche des Brennkammerkörpers erstrecken.

Ferner lässt sich die Porosität des porösen Abschnitts und somit die erzielbare Kühlung an die Form des Brennkammerkörpers anpassen. Zum Beispiel kann die Porosität so variieren, dass sie indirekt proportional zu einer Größe des Brennkammerkörpers in Radialrichtung ist. Mit anderen Worten kann die Porosität dort am größten sein, wo der Brennkammerkörper in Radialrichtung am kleinsten ist (wo gegenüberliegende Innenwände des Brennkammerkörpers den geringsten Abstand in Radialrichtung aufweisen und den Brennkammerhals bilden), und mit zunehmender Weite des Brennkammerkörpers in Radialrichtung abnehmen. Dadurch lässt sich nicht nur eine optimale Kühlung erzielen, sondern auch das vorhandene Kühlmedium effizient nutzen (beispielsweise keinen übermäßigen Verbrauch von Kühlmedium für die Transpirationskühlung, wo dies nicht unbedingt notwendig ist). In einer weiteren Implementierungsvariante kann der ein Kühlmedium führende Kanal ein Kühlkanal zur Kühlung der Innenwand des Brennkammerkörpers sein. Zum Beispiel kann der Brennkammerkörper mindestens einen Kühlkanal aufweisen, der sich im Wesentlichen in axialer Richtung erstreckt und auf einer Außenseite der die Innenwand bildenden Hülle oder Körper verläuft und zum Beispiel deren Verlauf in Radialrichtung betrachtet verfolgt. Alternativ kann der das Kühlmedium führende Kanal auch schräg zur Axialrichtung angeordnet sein. Zum Beispiel kann der Kanal spiralförmig um die Brennkammer herum angeordnet sein. Ebenfalls alternativ kann es sich bei dem das Kühlmedium führenden Kanal auch um zumindest einen Abschnitt einer das Kühlmedium führenden Gitterstruktur oder ähnliche Anordnung von mit einander verbundenen Hohlräumen handeln.

Jeder dieser das Kühlmedium führende Kanäle kann beispielsweise verwendet werden, um Treibstoff zu einem Brennkammerkopf zu befördern. Dabei kann der Treibstoff durch den Kanal in entgegengesetzter Richtung zu einem Heißgasstrom in der Brennkammer strömen, oder alternativ in gleicher Richtung wie der Heißgasstrom strömen. Dieser zur Kühlung des Brennkammerkörpers verwendete Treibstoff kann (in geringen Mengen) durch den porösen Abschnitt in das Innere des Brennkammerkörpers geführt werden, um dort die Transpirationskühlung an der Innenwand des Brennkammerkörpers zu bewerkstelligen.

In einer anderen Implementierungsvariante kann der ein Kühlmedium führende Kanal ein dedizierter Kanal sein, der einer Zuführung des Kühlmediums zu dem porösen Abschnitt dient. Mit anderen Worten ist der Kanal ausschließlich für die Zuführung des Kühlmediums zu dem porösen Abschnitt vorgesehen.

Nur beispielhaft kann der Kanal getrennt von anderen Kühlkanälen in oder an dem Brennkammerkörper angeordnet sein. Alternativ oder zusätzlich kann der Kanal von einem gemeinsamen Verteiler abzweigen, von dem auch Kühlkanäle oder andere das Kühlmedium führende Kanäle zu weiteren porösen Abschnitten abzweigen.

Erfindungsgemäß umfasst der Raketentriebwerksabschnitt ferner eine Vielzahl von Zufuhrleitungen, die den ein Kühlmedium führenden Kanal und den porösen Abschnitt fluidisch verbinden. Die Zufuhrleitungen dienen in erster Linie der fluidischen Verbindung zwischen dem Kanal und dem porösen Abschnitt, um zum Beispiel eine räumliche Trennung des Kanals und des porösen Abschnitts zu überbrücken. Eine solche räumliche Trennung kann einem vordefinierten Verlauf des Kanals an der Außenseite des Brennkammerkörpers geschuldet sein. Zum Beispiel müssen bei einer Vielzahl solcher Kanäle entlang des Brennkammerkörpers diese an einem Brennkammerhals aufgrund der Verjüngung der Brennkammer anders verlaufen als in Bereichen des Brennkammerkörpers, die eine größere radiale Ausdehnung als der Brennkammerhals aufweisen.

Weiterhin weist ein Teil der Vielzahl von Zufuhrleitungen eine Durchflussrate des Kühlmediums auf, die sich von einer Durchflussrate des Kühlmediums des übrigen Teils der Vielzahl von Zufuhrleitungen unterscheidet. Mit anderen Worten können die Zufuhrleitungen auch einer Bestimmung eines Volumenstroms und/oder Massenstroms von dem Kanal zu dem porösen Abschnitt (oder nur einem Teil davon) dienen. Dadurch lässt sich der Volumenstrom und/oder Massenstrom zusätzlich zur Porosität des porösen Abschnitts bestimmen und auch optimieren.

In einer anderen Implementierungsvariante kann das Kühlmedium ein Raketentreibstoff sein. Zum Beispiel kann es sich um kryogenen Treibstoff handeln und/oder um flüssigen Treibstoff handeln, der in dem porösen Abschnitt oder beim Verlassen des porösen Abschnitts in das Innere des Brennkammerkörpers verdampft und einen Kühlfilm an der Innenwand des Brennkammerkörpers bildet. Alternativ kann es sich bei dem Kühlmedium auch um ein gesondertes Kühlmedium handeln, wie zum Beispiel ein verflüssigtes und/oder kryogenes Gas oder eine Flüssigkeit (lediglich beispielhaft sei hier Wasser erwähnt).

Gemäß einem weiteren Aspekt zum besseren Verständnis der vorliegenden Offenbarung umfasst ein Verfahren zum Herstellen eines Raketentriebwerksabschnitts ein Bereitstellen mindestens eines Grundstoffs für einen Brennkammerkörper, und ein Herstellen, mittels additiver Fertigung aus dem mindestens einen Grundstoff, des Brennkammerkörpers mit einer Innenwand, mindestens einem auf einer Außenseite der Innenwand angeordneten Kanal und einem porösen Abschnitt, der einstückig mit der Innenwand ausgebildet und in die Innenwand integriert ist. Mit anderen Worten wird beim Herstellen die Innenwand des Brennkammerkörpers, ein dazu außenseitig angeordneter Kanal (zum Beispiel zum Führen eines Kühlmediums) und ein in der Innenwand ausgebildeter und darin integrierter poröser Abschnitt in einem einzelnen Arbeitsschritt gefertigt.

Alternativ hierzu kann bei dem Herstellen die Innenwand des Brennkammerkörpers und der darin integrierte poröse Abschnitt hergestellt werden, wobei die Innenwand einen Teil des außenseitig angeordneten Kanals bildet. Die übrigen Abschnitte des Kanals können in einem weiteren Herstellungsschritt an die Außenseite der Innenwand angebracht werden, um den Kanal zu komplettieren.

Insbesondere durch eine additive Fertigung (auch als 3D-Druck oder Additive Layer Manufacturing - ALM bezeichnet) kann der Brennkammerkörper schichtweise mit den neben der Innenwand angeordneten bzw. darin ausgebildeten und integrierten Komponenten hergestellt werden. Dadurch lassen sich sämtliche Hohlräume, zum Beispiel das Innere des Kanals sowie die die den porösen Abschnitt bildenden Hohlräume, in einfacher, schneller und kostengünstiger Weise und in beliebiger Form herstellen. Im Vergleich zum Herstellen und Einsetzen eines Inlays erspart diese Form der Herstellung viele Arbeitsschritte und somit teure Herstellungszeit.

Bei dem Grundstoff kann es sich um einen pulverförmigen Grundstoff handeln. Ebenso ist es möglich, einen flüssigen Grundstoff zu verwenden. In beiden Fällen kann durch Energieeintrag, beispielsweise mittels Laser, der Grundstoff zu einer festen Struktur verbunden werden.

Insbesondere umfasst das Herstellen ferner ein Erstellen einer fluidischen Verbindung zwischen dem Kanal und einem Inneren des Brennkammerkörpers durch den porösen Abschnitt. Mit anderen Worten wird ein durchgängiger Hohlraum bzw. eine Kette von miteinander verbundenen Hohlräumen von der Innenseite der Innenwand des Brennkammerkörpers bis in das Innere des Kanals geformt.

Die minimale Höhe eines solchen durchgängigen Hohlraums (zum Beispiel in Axialrichtung betrachtet, wenn dies auch die Fertigungsrichtung darstellt) wird dabei durch die minimal mögliche Schichtdicke einer Schicht des additiven Fertigungsverfahrens bestimmt. Ebenso kann die minimal mögliche Schichtdicke des gewählten additiven Fertigungsverfahrens die kleinstmögliche Höhe des porösen Abschnitts in Fertigungsrichtung betrachtet bestimmen. Je nach Wahl des Fertigungssystems können die Hohlräume bzw. festen Bestandteile des porösen Abschnitts im Mikrometerbereich oder sogar im Nanometerbereich gefertigt werden. Dadurch lässt sich eine sehr gute Eintragung des Kühlmediums in das Innere des Brennkammerkörpers als Kühlfilm bewerkstelligen. Insbesondere kann der Volumenstrom und/oder Massenstrom des Kühlmediums durch den porösen Abschnitt sehr fein eingestellt und bestimmt werden.

Insbesondere kann hierbei eine Porosität des porösen Abschnitts einen Volumenstrom und/oder Massestrom eines Fluids, das von dem Kanal in das Innere des Brennkammerkörpers strömt, bestimmen.

In einer Implementierungsvariante kann das Herstellen des porösen Abschnitts des Brennkammerkörpers ein Auslassen während der additiven Fertigung von vordefinierten Bereichen, die eine Fluid-durchlässige Struktur bilden, zumindest in einem Abschnitt der Innenwand umfassen. Mit anderen Worten werden die Bereiche des porösen Abschnitts, die einen Hohlraum bilden, und/oder der Kanal und/oder eine Zufuhrleitung und/oder andere Hohlräume zum Führen von Kühlmedium bei der additiven Fertigung ausgelassen und der Grundstoff nicht zu einer festen Struktur verbunden. Zum Beispiel kann in diesen Bereichen kein Energieeintrag in den Grundstoff erfolgen, sodass dieser in diesen Bereichen nicht miteinander verschmilzt oder verklebt.

Beispielsweise können die festen Bestandteile des porösen Abschnitts eine Gitterförmige, zum Beispiel gleichmäßige, Struktur aufweisen. Alternativ können die festen Bestandteile des porösen Abschnitts auch eine Schwamm-ähnliche Struktur aufweisen, wobei zumindest einige der Hohlräume des Schwamms miteinander verbunden sind oder zumindest für das Kühlmedium durchlässig sind. Die Struktur des porösen Abschnitts kann so gewählt werden, dass der Volumenstrom und/oder Massenstrom des Kühlmediums durch den porösen Abschnitt hindurch dadurch bestimmt ist.

In einer anderen Implementierungsvariante kann das Herstellen des porösen Abschnitts des Brennkammerkörpers mittels additiver Fertigung ein Verringern des Energieeintrags als für das Herstellen anderer Abschnitte des Brennkammerkörpers umfassen. Mit anderen Worten kann bei der additiven Fertigung ein bestimmter Energieeintrag zur Herstellung der festen Bestandteile des Brennkammerkörpers und/oder Kanals angewandt werden, der dafür optimiert ist, den Grundstoff zu einer statisch und thermisch belastbaren Struktur zu verbinden. Um die Porosität des porösen Abschnitts zu erzielen und/oder zu bestimmen, kann in zumindest einem Teil des porösen Abschnitts der Energieeintrag geringer gewählt werden. Dadurch wird der Grundstoff weniger stark miteinander verschmolzen oder verklebt, wodurch ein loseres Gerüst entsteht. Durch anschließendes Entfernen von nicht verschmolzenem oder verklebtem Grundstoff bleibt der poröse Abschnitt übrig.

Bevorzugte Ausführungsformen der Erfindung werden nun anhand der beigefügten schematischen Zeichnungen näher erläutert, wobei
- Figur 1: schematisch eine Schnittansicht eines Raketentriebwerksabschnitts zeigt;
- Figur 2: schematisch Axial- und Querschnittsansichten eines Brennkammerkörpers zeigt;
- Figur 3: weitere schematisch Axial- und Querschnittsansichten eines Brennkammerkörpers zeigt; und
- Figur 4: zeigt schematisch ein Ablaufdiagramm eines Verfahrens zum Herstellen eines Raketentriebwerksabschnitts.

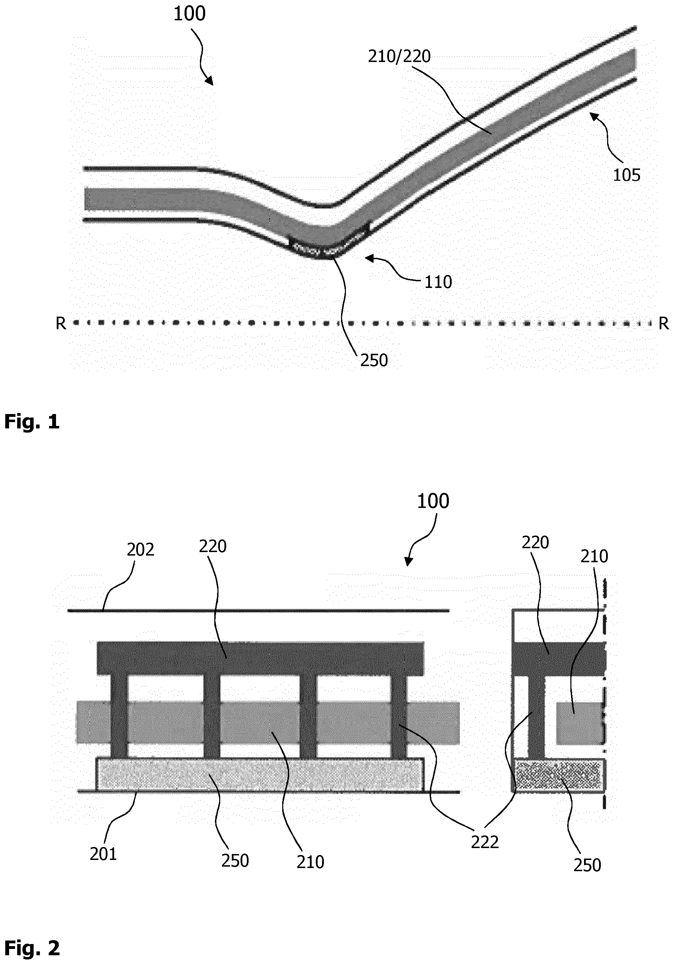

Figur 1 zeigt schematisch eine Schnittansicht eines Raketentriebwerksabschnitts 100. Die Schnittansicht zeigt den Raketentriebwerksabschnitt 100 in einer Schnittebene parallel zu und durch eine Rotationssymmetrieachse R eines Brennkammerkörpers 105 des Raketentriebwerksabschnitts 100. Die Rotationssymmetrieachse R verläuft dabei in Axialrichtung. Der dargestellte Raketentriebwerksabschnitt 100 umfasst beispielsweise einen Brennkammerhals 110 des Brennkammerkörpers 105. Dieser Brennkammerhals 110 ist für gewöhnlich die engste Stelle des Innenraums des Brennkammerkörpers 105. Beispielsweise kann sich in Figur 1 links des Brennkammerhalses 110 ein Brennkammerkopf befinden (nicht dargestellt), in den Treibstoffkomponenten eingeleitet werden und verbrennen. Der Ausstoß der verbrennenden oder schon verbrannten Treibstoffkomponenten erfolgt in Figur 1 demnach nach rechts und diese passieren dabei den Brennkammerhals 105. Dieser ist somit einer hohen thermischen Belastung ausgesetzt.

Der Brennkammerkörper 105 umfasst eine Innenwand 201 sowie eine Außenwand 202, wobei auf Letztere nicht näher eingegangen wird. Um insbesondere die Innenwand 201 zu kühlen, verläuft außenseitig und entlang der Innenwand mindestens ein ein Kühlmedium führender Kanal 210, 220. Zum Beispiel kann durch den Kanal 210, 220 ein Kühlmedium zu dem Brennkammerkopf (in Figur 1 links, nicht dargestellt) strömen und dabei dem Brennkammerkörper 105 und insbesondere dessen Innenwand 201 kühlen. Die Innenwand 201 kann dabei eine Wand des Kanals 110, 220 darstellen.

In dem besonders beanspruchten Bereich des Brennkammerhalses 110 ist ferner ein poröser Abschnitt 250 dargestellt. Selbstverständlich kann ein solcher poröser Abschnitt 250 auch an anderen Stellen des Brennkammerkörpers 105 angeordnet sein oder sich auch über die gesamte Innenwand 201 des Brennkammerkörpers erstrecken. Dies gilt sowohl in Axialrichtung als auch Radialrichtung (senkrecht zur Zeichnungsebene in Figur 1). Ferner können natürlich auch mehrere poröse Abschnitte 250 in der Innenwand 201 vorgesehen sein.

Der poröse Abschnitt 250 ist einstückig mit der Innenwand 201 ausgebildet und in die Innenwand 201 integriert. D. h. das Material, das den porösen Abschnitt 250 bildet, ist dasselbe, das auch die Innenwand 201 bildet. Der poröse Abschnitt 250 ist insbesondere dazu eingerichtet, dass in dem Kanal 210, 220 geführte Kühlmedium von dem Kanal 210, 220 in das Innere des Brennkammerkörpers 105 zu führen und hindurchzulassen. Mit anderen Worten bildet der poröse Abschnitt 250 eine fluidische Verbindung zwischen dem Kanal 210, 220 und dem Innenraum des Brennkammerkörpers 105 (der Brennkammer).

Eine Porosität des porösen Abschnitts 250, die durch ein Verhältnis zwischen Hohlraum und Feststoff definiert ist, bestimmt dabei einen Volumenstrom und/oder Massenstrom des in das Innere des Brennkammerkörpers 105 hindurchgelassenen Kühlmediums. Aufgrund der Porosität strömte das Kühlmedium zu der Innenseite der Innenwand 201 und bildet dort einen Kühlfilm. Dieser Kühlfilm bietet eine Transpirationskühlung direkt an der thermisch belasteten Oberfläche der Innenwand 201.

Wie der Darstellung in Figur 1 entnommen werden kann, ändert sich gerade in dem Bereich des Brennkammerhalses 110 entlang der Axialrichtung (Rotationssymmetrieachse R) ein Abstand der Innenwand 201 von der Rotationssymmetrieachse R. Dementsprechend ändert sich auch die thermische Belastung der Innenwand 201. Selbstverständlich kann sich die thermische Belastung der Innenwand 201 auch aufgrund des Verbrennungsfortschritts in der Brennkammer in Axialrichtung ändern.

Die Porosität des porösen Abschnitts 250 kann dabei in Axialrichtung und/oder in Umfangsrichtung variieren, um an die entsprechende thermische Belastung angepasst zu sein. So kann eine größere Porosität an der Stelle mit dem geringsten Abstand zur Rotationssymmetrieachse R implementiert sein. Eine große Porosität bedeutet, dass mehr und/oder größere Hohlräume (und auch mehr und/oder größere Verbindungen zwischen Hohlräumen) des porösen Abschnitt 250 vorliegen. Dies entspricht auch einem größeren Volumenstrom und/oder Massenstrom des Kühlmediums, der die Innenseite der Innenwand 201 durch den porösen Abschnitt 250 erreicht. Somit kann eine größere Kühlung der Innenwand 201 erzielt werden.

Figur 2 zeigt Schnittansichten eines Brennkammerkörpers 105. Insbesondere sind eine Schnittansicht in Axialrichtung (links in Figur 2) sowie eine Schnittansicht in Umfangsrichtung des Brennkammerkörpers 105 (rechts in Figur 2) dargestellt. Der gezeigte Raketentriebwerksabschnitt 100 zeigt einen dedizierten Kanal 220, der einer Zuführung des Kühlmediums zu dem porösen Abschnitt 250 dient. Der dedizierte Kanal 220 führt ein Kühlmedium, welches außenseitig in den porösen Abschnitt 250 geleitet werden kann. Beispielsweise können hierfür eine oder mehrere Zufuhrleitungen 222 vorgesehen sein, die den Kanal 220 mit dem porösen Abschnitt 250 fluidisch verbinden. Bei dem Kühlmedium kann es sich beispielsweise um einen Treibstoff des Raketentriebwerks handeln.

Der dedizierten Kanal 220, von dem in Figur 2 lediglich ein Ausschnitt sichtbar ist, kann auch Teil einer fluidführenden Gitterstruktur sein, die über die eine oder mehreren Zufuhrleitungen 222 mit dem porösen Abschnitt 250 fluidisch verbunden ist.

Über die eine oder mehreren Zufuhrleitungen 222 kann auch eine Durchflussrate des Kühlmediums in den porösen Abschnitt 250 bestimmt werden. Zum einen lässt sich die Durchflussrate durch die Anzahl an Zufuhrleitungen 222 pro festgelegter Flächeneinheit des porösen Abschnitts 250 bestimmen. Zum anderen lässt sich die Durchflussrate auch durch einen vordefinierten Innendurchmesser der Zufuhrleitungen 222 bestimmen. Durch entsprechende Wahl an Zufuhrleitungen 222 können unterschiedliche Bereiche des porösen Abschnitts 250 mit einem unterschiedlichen Volumenstrom und/oder Massenstrom des Kühlmediums beschickt werden. So kann zum Beispiel ein Teil der Zufuhrleitungen 222 eine Durchflussrate des Kühlmediums aufweisen, die sich von einer Durchflussrate des Kühlmediums eines anderen Teils der Zufuhrleitungen 222 unterscheiden. Dies kann ebenfalls über einen Innendurchmesser und/oder Anzahl an Leitungen 222 pro Flächeneinheit festgelegt sein. In jedem Fall kann der poröse Abschnitt 250 in Axialrichtung und/oder Umfangsrichtung eine unterschiedliche Transpirationskühlung bewirken, da unterschiedlich viel Kühlmedium zu den einzelnen Bereichen des porösen Abschnitt 250 geleitet wird.

Selbstverständlich kann auch die Porosität des porösen Abschnitts 250 in Axialrichtung und/oder Umfangsrichtung variieren. Dies kann zusätzlich oder alternativ zu den unterschiedlichen Zufuhrleitungen 222 implementiert sein.

Wie in Figur 2 dargestellt ist, weist der Raketentriebwerksabschnitt 100 optional einen Kühlkanal 210 auf. Dieser ist, wie der Kanal 220, außenseitig und entlang der Innenwand 201 angeordnet. Im Unterschied zu dem Kanal 220 verläuft der Kühlkanal 210 unabhängig davon und führt Kühlmedium (dasselbe wie in Kanal 220 oder ein anderes) beispielsweise zu einem Brennkammerkopf (nicht dargestellt). In beiden Fällen wird das Kühlmedium zur Kühlung der Innenwand 201 eingesetzt, da das Kühlmedium in dem Kanal 210, 220 Wärme der Innenwand 201 aufnimmt (auch unabhängig davon, ob es in den porösen Abschnitt 250 geleitet wird).

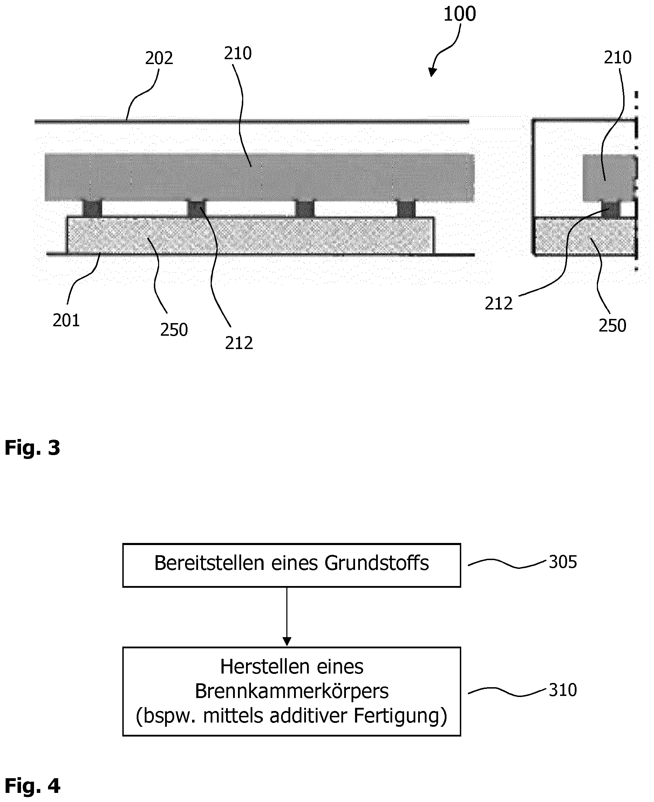

In Figur 3 sind ebenfalls Schnittansichten eines Raketentriebwerksabschnitts 100 entsprechend denen aus Figur 2 dargestellt. In dem hier gezeigten Raketentriebwerksabschnitt 100 ist der ein Kühlmedium führende Kanal ein zumindest in dem dargestellten Bereich im Wesentlichen in Axialrichtung des Brennkammerkörpers 105 verlaufender Kühlkanal 210, der zur Kühlung der Innenwand 201 des Brennkammerkörpers 105 vorgesehen ist. Der Kühlkanal 210, von dem in Figur 3 lediglich ein Ausschnitt sichtbar ist, kann auch Teil einer fluidführenden Gitterstruktur sein, die mit dem porösen Abschnitt 250 fluidisch verbunden ist.

Im Vergleich zu dem Aufbau aus Figur 2 wird hier kein dedizierter Kanal 220 benötigt, wodurch der Raketentriebwerksabschnitt 100 einfacher herzustellen ist. Andererseits kann bei dem Aufbau aus Figur 2 der Volumenstrom und/oder Massenstrom zur Transpirationskühlung am porösen Abschnitt 250 unabhängig von einem Kühlmediumstrom in dem Kanal 210 gesteuert werden. Beispielsweise kann der Kühlkanal 210 in Figur 2 zur Versorgung des Raketentriebwerks mit Raketentreibstoff verwendet werden, dessen Volumenstrom und/oder Massenstrom gegebenenfalls unterschiedlich zu einer Kühlung am porösen Abschnitt 250 gesteuert werden muss.

Der poröse Abschnitt 250 in Figur 3 kann über eine oder mehrere Zufuhrleitungen 212 mit dem Kanal 210 fluidisch verbunden sein. Die Zufuhrleitungen 212 können in gleicher Weise ausgestaltet sein, wie die Zufuhrleitungen 222, die mit Bezug auf Figur 2 beschrieben wurden.

Gemäß einem Beispiel, das nicht in den Schutzbereich der beanspruchten Erfindung fällt, kann der poröse Abschnitt 250 auch einstückig mit einer Seitenwand des Kanals 210 ausgebildet und darin integriert sein. Mit anderen Worten kann auf gesondert hergestellte Zufuhrleitungen 212 verzichtet werden. Beispielsweise kann die Innenwand 201 auch den Kühlkanal 210 zumindest abschnittsweise begrenzen. Die Hohlräume des porösen Abschnitts 250 verbinden damit einen Innenraum (Lumen) des Kanals 210 mit der Brennkammer (Innenseite des Brennkammerkörpers 105). Durch entsprechende Wahl der Porosität kann eine Transpirationskühlung der Innenwand 201 variieren und je nach Lage innerhalb des Brennkammerkörpers 105 bestimmt werden.

Figur 4 zeigt schematisch ein Ablaufdiagramm eines Verfahrens zum Herstellen eines Raketentriebwerksabschnitts 100. In einem ersten Schritt 305 wird mindestens ein Grundstoff für einen Brennkammerkörper 105 bereitgestellt. Bei dem mindestens einen Grundstoff kann es sich zum Beispiel um ein Metall, eine Metalllegierung oder eine Keramik handeln. Insbesondere kann der Grundstoff pulverförmigen oder flüssig bereitgestellt werden und dazu eingerichtet sein, durch punktuellen Energieeintrag miteinander verschmolzen oder verklebt zu werden.

In einem weiteren Schritt 310, wird mittels additiver Fertigung, beispielsweise einem punktuellen Energieeintrag in den bereitgestellten Grundstoff, ein Brennkammerkörper 105 mit einer Innenwand 201, mindestens einem auf einer Außenseite der Innenwand 201 angeordneten Kanal 210, 220 und einem porösen Abschnitt 250, der einstückig mit der Innenwand 201 ausgebildet und in die Innenwand 201 integriert ist, hergestellt. Bei der Herstellung, insbesondere des porösen Abschnitts 250, kann eine fluidische Verbindung zwischen dem Kanal 210, 220 und einem Inneren des Brennkammerkörpers 105 durch den porösen Abschnitt 250 hindurch gefertigt werden.

Dies kann zum Beispiel durch Auslassen von vordefinierten Bereichen erfolgen, die Hohlräume des porösen Abschnitts 250 bilden. Mit anderen Worten wird der Grundstoff nur in Bereichen um die Hohlräume herum verfestigt und zu einer Struktur geformt, die eine Fluid-durchlässige Struktur durch die Hohlräume bildet. Alternativ hierzu kann ein Energieeintrag während der additiven Fertigung verringert werden, als dies für das Herstellen anderer Abschnitte des Brennkammerkörpers erforderlich ist. Durch den geringeren Energieeintrag wird der Grundstoff weniger stark miteinander verbunden, sodass eine poröse Struktur entsteht. Durch anschließendes Entfernen von nicht miteinander verbundenem Grundstoff bleibt das den porösen Abschnitt 250 bildende Gerüst übrig.

Die hier beschriebenen Ausführungsformen sind lediglich beispielhaft und dienen nur der Erläuterung der vorliegenden Erfindung.

## Patentansprüche

1. Raketentriebwerksabschnitt (100), umfassend:
- einen Brennkammerkörper (105) mit einer Innenwand (201);
- einen ein Kühlmedium führenden Kanal (210, 220), der außenseitig und entlang der Innenwand (201) verläuft; und
- einen porösen Abschnitt (250), der einstückig mit der Innenwand (201) ausgebildet und in die Innenwand (201) integriert ist und dazu eingerichtet ist, das in dem Kanal (210, 220) geführte Kühlmedium von dem Kanal (210, 220) in das Innere des Brennkammerkörpers (105) hindurchzulassen,
wobei eine Porosität des porösen Abschnitts (250) einen Volumenstrom und/oder Massenstrom des in das Innere des Brennkammerkörpers (105) hindurchgelassenen Kühlmediums bestimmt
**dadurch gekennzeichnet, dass** der Raketentriebwerksabschnitt (100) ferner umfasst:
- eine Vielzahl von Zufuhrleitungen (212, 222), die den ein Kühlmedium führenden Kanal (220) und den porösen Abschnitt (250) fluidisch verbinden,
wobei ein Teil der Vielzahl von Zufuhrleitungen (212, 222) eine Durchflussrate des Kühlmediums aufweist, die sich von einer Durchflussrate des Kühlmediums des übrigen Teils der Vielzahl von Zufuhrleitungen (212, 222) unterscheidet, sodass unterschiedliche Bereiche des porösen Abschnitts (250) mit einem unterschiedlichen Volumenstrom und/oder Massenstrom des Kühlmediums beschickt werden.

2. Raketentriebwerksabschnitt (100) gemäß Anspruch 1, wobei die Porosität des porösen Abschnitts (250) in Axialrichtung und/oder Umfangsrichtung des Brennkammerkörpers (105) variiert.

3. Raketentriebwerksabschnitt (100) gemäß Anspruch 1 oder 2, wobei der poröse Abschnitt (250) an einem Brennkammerhals (110) des Brennkammerkörpers (105) angeordnet ist.

4. Raketentriebwerksabschnitt (100) gemäß einem der Ansprüche 1 bis 3, wobei der ein Kühlmedium führende Kanal (210, 220) ein Kühlkanal (210) zur Kühlung der Innenwand (201) des Brennkammerkörpers (105) oder ein Abschnitt einer das Kühlmedium führenden Gitterstruktur (210, 220) zur Kühlung der Innenwand (201) des Brennkammerkörpers (105) ist.

5. Raketentriebwerksabschnitt (100) gemäß einem der Ansprüche 1 bis 3, wobei der ein Kühlmedium führende Kanal (210, 220) ein dedizierter Kanal (220) ist, der nur einer Zuführung des Kühlmediums zu dem porösen Abschnitt (250) dient.

6. Raketentriebwerksabschnitt (100) gemäß einem der Ansprüche 1 bis 5, wobei das Kühlmedium ein Raketentreibstoff ist.

7. Verfahren zum Herstellen eines Raketentriebwerksabschnitts (100), umfassend:
- Bereitstellen (305) mindestens eines Grundstoffs für einen Brennkammerkörper (105); und
- Herstellen (310), mittels additiver Fertigung aus dem mindestens einen Grundstoff, des Brennkammerkörpers (105) mit einer Innenwand (201), mindestens einem auf einer Außenseite der Innenwand (201) angeordneten Kanal (210, 220) und einem porösen Abschnitt (250), der einstückig mit der Innenwand (201) ausgebildet und in die Innenwand (201) integriert ist,
wobei das Herstellen ferner ein Erstellen einer fluidischen Verbindung zwischen dem Kanal (210, 220) und einem Inneren des Brennkammerkörpers (105) durch den porösen Abschnitt (250) umfasst, und
wobei eine Porosität des porösen Abschnitts (250) einen Volumenstrom und/oder Massenstrom eines Fluids, das von dem Kanal (210, 220) in das Innere des Brennkammerkörpers (105) strömt, bestimmt,
wobei das Herstellen ferner ein Herstellen einer Vielzahl von Zufuhrleitungen (212, 222), die den ein Kühlmedium führenden Kanal (220) und den porösen Abschnitt (250) fluidisch verbinden, umfasst, und wobei
ein Teil der Vielzahl von Zufuhrleitungen (212, 222) eine Durchflussrate des Kühlmediums aufweist, die sich von einer Durchflussrate des Kühlmediums des übrigen Teils der Vielzahl von Zufuhrleitungen (212, 222) unterscheidet, sodass unterschiedliche Bereiche des porösen Abschnitts (250) mit einem unterschiedlichen Volumenstrom und/oder Massenstrom des Kühlmediums beschickt werden.

8. Verfahren gemäß Anspruch 7, wobei das Herstellen des porösen Abschnitts (250) des Brennkammerkörpers (105) ein Auslassen während der additiven Fertigung von vordefinierten Bereichen, die eine Fluid-durchlässige Struktur bilden, zumindest in einem Abschnitt der Innenwand (201) umfasst.

9. Verfahren gemäß Anspruch 7, wobei das Herstellen des porösen Abschnitts (250) des Brennkammerkörpers (105) mittels additiver Fertigung ein Verringern des Energieeintrags als für das Herstellen anderer Abschnitte des Brennkammerkörpers (105) umfasst.

## Claims

1. A rocket engine section (100), comprising
- a combustion chamber body (105) having an inner wall (201);
- a channel (210, 220) carrying a cooling medium and extending outside and along the inner wall (201); and
- a porous portion (250) formed integrally with the inner wall (201) and integrated into the inner wall (201) and configured to allow the cooling medium guided in the channel (210, 220) to pass from the channel (210, 220) into the interior of the combustion chamber body (105),
wherein a porosity of the porous portion (250) determines a volume flow rate and/or mass flow rate of the cooling medium let through into the interior of the combustion chamber body (105),
**characterised in that** the rocket engine section (100) further comprises:
- a plurality of supply lines (212, 222) fluidly connecting the channel (220) carrying the cooling medium and the porous portion (250),
wherein a part of the plurality of supply lines (212, 222) has a flow rate of the cooling medium that is different from a flow rate of the cooling medium of the remaining part of the plurality of supply lines (212, 222), such that different regions of the porous portion (250) are supplied with a different volume flow rate and/or mass flow rate of the cooling medium.

2. The rocket engine section (100) according to claim 1, wherein the porosity of the porous portion (250) varies in axial direction and/or circumferential direction of the combustion chamber body (105).

3. The rocket engine section (100) according to claim 1 or 2, wherein the porous portion (250) is arranged at a combustion chamber throat (110) of the combustion chamber body (105).

4. The rocket engine section (100) according to one of claims 1 to 3, wherein the channel (210, 220) carrying a cooling medium is a cooling channel (210) for cooling the inner wall (201) of the combustion chamber body (105) or a section of a grid structure (210, 220) carrying the cooling medium for cooling the inner wall (201) of the combustion chamber body (105).

5. The rocket engine section (100) according to any one of claims 1 to 3, wherein the channel (210, 220) carrying a cooling medium is a dedicated channel (220) serving only to supply the cooling medium to the porous portion (250).

6. The rocket engine section (100) according to any one of claims 1 to 5, wherein the cooling medium is a rocket propellant.

7. A method of manufacturing a rocket engine section (100), comprising:
- providing (305) at least one base material for a combustion chamber body (105); and
- manufacturing (310), by additive manufacturing from the at least one base material, the combustion chamber body (105) having an inner wall (201), at least one channel (210, 220) disposed on an outer surface of the inner wall (201), and a porous portion (250) integrally formed with the inner wall (201) and integrated into the inner wall (201),
wherein the manufacturing further comprises establishing a fluidic connection between the channel (210, 220) and an interior of the combustion chamber body (105) through the porous portion (250), and
wherein a porosity of the porous portion (250) determines a volume flow rate and/or mass flow rate of a fluid flowing from the channel (210, 220) into the interior of the combustion chamber body (105),
wherein the manufacturing further comprises manufacturing a plurality of supply lines (212, 222) fluidly connecting the channel (220) carrying a cooling medium and the porous portion (250), and wherein
a part of the plurality of supply lines (212, 222) has a flow rate of the cooling medium that differs from a flow rate of the cooling medium of the remaining part of the plurality of supply lines (212, 222), so that different areas of the porous portion (250) are supplied with a different volume flow rate and/or mass flow rate of the cooling medium.

8. The method according to claim 7, wherein manufacturing the porous portion (250) of the combustion chamber body (105) comprises omitting, during the additive manufacturing, predefined regions forming a fluid-permeable structure at least in a portion of the inner wall (201).

9. The method according to claim 7, wherein manufacturing the porous portion (250) of the combustion chamber body (105) by means of additive manufacturing comprises reducing the energy input as for manufacturing other portions of the combustion chamber body (105).

## Revendications

1. Section de moteur fusée (100), comprenant:
- un corps de chambre de combustion (105) doté d'une paroi intérieure (201);
- un canal (210, 220) transportant un fluide de refroidissement, qui s'étend à l'extérieur et le long de la paroi intérieure (201); et
- une section poreuse (250) formée d'un seul tenant avec la paroi intérieure (201) et intégrée dans la paroi intérieure (201) et adaptée pour permettre au fluide de refroidissement guidé dans le canal (210, 220) de passer du canal (210, 220) à l'intérieur du corps de chambre de combustion (105),
dans lequel une porosité de la section poreuse (250) détermine un débit volumétrique et/ou un débit massique du fluide de refroidissement admis à l'intérieur du corps de chambre de combustion (105)
**caractérisée en ce que** la section de moteur fusée (100) comprend en outre:
- une pluralité de conduits d'alimentation (212, 222) reliant fluidiquement le canal (220) transportant un fluide de refroidissement et la section poreuse (250),
dans lequel une partie de la pluralité de conduits d'alimentation (212, 222) a un débit d'écoulement du fluide de refroidissement qui est différent d'un débit d'écoulement du fluide de refroidissement de la partie restante de la pluralité de conduits d'alimentation (212, 222), de sorte que différentes zones de la section poreuse (250) soient alimentées selon un débit volumétrique et/ou un débit massique différent du milieu de refroidissement.

2. Section de moteur fusée (100) selon la revendication 1, dans lequel la porosité de la section poreuse (250) varie dans la direction axiale et/ou la direction circonférentielle du corps de chambre de combustion (105).

3. Section de moteur fusée (100) selon la revendication 1 ou 2, dans lequel la section poreuse (250) est disposée sur un col de chambre de combustion (110) du corps de chambre de combustion (105).

4. Section de moteur fusée (100) selon l'une quelconque des revendications 1 à 3, dans lequel le canal (210, 220) transportant un fluide de refroidissement est un canal de refroidissement (210) pour le refroidissement de la paroi intérieure (201) du corps de chambre de combustion (105) ou une section d'une structure en grille (210, 220) transportant le fluide de refroidissement pour le refroidissement de la paroi intérieure (201) du corps de chambre de combustion (105).

5. Section de moteur fusée (100) selon l'une quelconque des revendications 1 à 3, dans lequel le canal (210, 220) transportant un milieu de refroidissement est un canal dédié (220) qui sert uniquement à transporter le fluide de refroidissement vers la section poreuse (250).

6. Section de moteur fusée (100) selon l'une quelconque des revendications 1 à 5, dans lequel le fluide de refroidissement est un carburant de fusée.

7. Procédé de fabrication d'une section de moteur fusée (100), consistant à:
- fournir (305) au moins un matériau de base pour un corps de chambre de combustion (105); et
- fabriquer (310), par fabrication additive à partir de l'au moins un matériau de base, le corps de chambre de combustion (105) doté d'une paroi intérieure (201), au moins un canal (210, 220) disposé sur un côté extérieur de la paroi intérieure (201) et une section poreuse (250) qui est formée d'un seul tenant avec la paroi intérieure (201) et intégrée dans la paroi intérieure (201),
dans lequel la fabrication comprend en outre l'établissement d'une communication fluidique entre le canal (210, 220) et un intérieur du corps de chambre de combustion (105) à travers la section poreuse (250), et
dans lequel une porosité de la section poreuse (250) détermine un débit volumétrique et/ou un débit massique d'un fluide s'écoulant depuis le canal (210, 220) vers l'intérieur du corps de chambre de combustion (105),
dans lequel la fabrication comprend en outre la fabrication d'une pluralité de conduits d'alimentation (212, 222) qui relient fluidiquement le canal (220) transportant un fluide de refroidissement et la section poreuse (250), et dans lequel
une partie de la pluralité de conduits d'alimentation (212, 222) a un débit d'écoulement du fluide de refroidissement qui est différent d'un débit d'écoulement du fluide de refroidissement de la partie restante de la pluralité de conduits d'alimentation (212, 222), de sorte que différentes zones de la section poreuse (250) soient alimentées selon un débit volumétrique et/ou un débit massique différent du fluide de refroidissement.

8. Procédé selon la revendication 7, dans lequel la fabrication de la section poreuse (250) du corps de chambre de combustion (105) comprend l'omission, pendant la fabrication additive, de zones prédéfinies formant une structure perméable aux fluides, au moins dans une section de la paroi interne (201).

9. Procédé selon la revendication 7, dans lequel la fabrication de la section poreuse (250) du corps de chambre de combustion (105) par fabrication additive comprend une réduction de l'apport d'énergie par rapport à la fabrication d'autres sections du corps de chambre de combustion (105).
